# DEMANDE DE BREVET EUROPEEN

(11) **EP 4 420 574 A2**
(43) Date de publication de la demande: **28.08.2024**
(21) Numéro de dépôt: 24189093.8
(22) Date de dépôt: 05.08.2020
(51) Int. Cl.: A47J 37/06

(54) **APPAREIL DE CUISSON A AIR CHAUD AVEC PLUSIEURS CONFIGURATIONS FONCTIONNELLES**

(30) Priorité: 29.08.2019 FR 1909531
(62) Demande divisionnaire de: 20189714.7
(71) Demandeur: SEB S.A., 69130 Ecully (FR)
(72) Inventeur: PRIETO, Guillaume, 69134 ECULLY CEDEX (FR); BAILLY, Adrien, 69134 ECULLY CEDEX (FR); DUMOUX, Philippe, 69134 ECULLY CEDEX (FR)
(74) Mandataire: SEB Développement

(57) **Abrégé**

L'invention concerne un appareil de cuisson à air chaud (1) comprenant un bloc de chauffe (2) muni d'un dispositif de chauffe et une embase (3) munie d'un logement (9) au-dessus duquel se monte le bloc de chauffe (2) pour définir une première configuration fonctionnelle de l'appareil de cuisson (1) selon laquelle ledit logement (9) est apte à recevoir un récipient de cuisson (10) muni d'une ouverture supérieure destinée à être disposée en regard du dispositif de chauffe (2). Le bloc de chauffe (2) peut être placé de manière stable en position retournée par-dessus l'embase (3) et comprend des moyens de support (43) apte à recevoir un récipient de cuisson (10) en disposant son fond (27) en regard du dispositif de chauffe, de sorte que l'appareil (1) présente une deuxième configuration fonctionnelle permettant la cuisson d'aliments dans un récipient posé sur le bloc de chauffe retourné par-dessus l'embase et chauffant le fond dudit récipient.

## Description

### Domaine technique

La présente invention concerne les appareils de cuisson à air chaud qui permettent de réaliser une cuisson des aliments au moyen d'une circulation d'air chaud, ladite cuisson étant réalisée en utilisant très peu d'huile, voire pas du tout d'huile.

Un principal objectif de l'invention est de réduire l'encombrement de l'appareil de cuisson à air chaud de sorte à faciliter son rangement.

### Etat de la technique

Les appareils de cuisson à air chaud sont bien connus de l'homme du métier, ceux-ci étant généralement dénommés « friteuse à air chaud ». Un tel appareil de cuisson permet de réduire fortement la quantité de matière grasse, voire de la supprimer complètement, lors de la cuisson des aliments qui s'effectue simplement grâce à de l'air chaud qui circule dans une enceinte de cuisson contenant les aliments à cuire. Ainsi, il est possible de consommer des aliments plus diététiques, ces aliments pouvant être d'origine végétale ou animale, par exemple des frites, des légumes, de la viande ou du poisson.

Un appareil de cuisson à air chaud comprend généralement une embase fermée qui incorpore une cuve amovible. Cette cuve permet la réception des aliments à cuire, soit directement soit en disposant ces aliments à cuire dans un panier amovible, lui-même positionné dans la cuve. Une fois les aliments disposés dans la cuve et celle-ci placée dans l'embase, l'appareil de cuisson est fermé pour constituer une enceinte de cuisson incorporant la cuve, l'éventuel panier et les aliments. De l'air chaud circule ensuite dans cette enceinte de cuisson au moyen d'un bloc de chauffe disposé en partie supérieure de l'appareil de cuisson, au-dessus de l'embase, la circulation de l'air chaud permettant de réaliser la cuisson des aliments placés dans la cuve. Le bloc de chauffe comporte un dispositif de chauffe et un dispositif de circulation d'air permettant d'assurer la circulation de l'air chauffé dans l'enceinte de cuisson.

Une telle conception d'appareil de cuisson à air chaud a pour inconvénient d'avoir un nombre de modes de cuisson limité, la cuve devant être placée sur l'embase de manière à constituer l'enceinte de chauffe et à permettre la cuisson d'aliments au moyen d'une circulation d'air chaud dans ladite enceinte.

### Exposé de l'invention

L'invention a pour objectif d'augmenter les différents types de cuisson pouvant être réalisés au moyen d'un appareil de cuisson à air chaud.

Cet objectif de l'invention est atteint en concevant un appareil de cuisson à air chaud qui comprend un bloc de chauffe agencé en partie supérieure et une embase agencée en partie inférieure. Le bloc de chauffe comprend un dispositif de chauffe permettant de chauffer de l'air et un dispositif de circulation permettant de déplacer l'air chauffé. L'embase comprend un logement au-dessus duquel se monte le bloc de chauffe pour définir une première configuration fonctionnelle de l'appareil de cuisson selon laquelle ledit logement est apte à recevoir un récipient de cuisson muni d'une ouverture supérieure destinée à être disposée en regard du dispositif de chauffe. En outre, selon l'invention, le bloc de chauffe est configuré pour être placé de manière stable en position retournée par-dessus l'embase et comprend des moyens de support aptes à recevoir un récipient de cuisson en disposant un fond dudit récipient en regard du dispositif de chauffe, de sorte que l'appareil de cuisson présente une deuxième configuration fonctionnelle permettant la cuisson d'aliments dans un récipient posé sur le bloc de chauffe retourné par-dessus l'embase et chauffant le fond dudit récipient.

Cette conception de l'appareil de cuisson permet pour le moins de doubler les configurations fonctionnelles, ledit appareil pouvant être utilisé soit selon la première configuration fonctionnelle de manière traditionnelle, c'est-à-dire en faisant circuler de l'air chaud dans le récipient de cuisson, cet air chaud pénétrant par l'ouverture supérieure du récipient de cuisson, soit selon la deuxième configuration fonctionnelle en posant le récipient de cuisson sur le bloc de chauffe retourné et posé de manière stable sur l'embase et en chauffant le fond dudit récipient de cuisson. Cette deuxième configuration fonctionnelle permettra par exemple la réalisation de plats mijotés.

Selon l'appareil de cuisson à air chaud objet de l'invention, le bloc de chauffe comprend un contour configuré pour que, dans la position retournée du bloc de chauffe par-dessus l'embase, une partie dédiée dudit bloc de chauffe soit encastrée dans le logement de l'embase de sorte à réduire la hauteur de l'appareil de cuisson dans la deuxième configuration fonctionnelle. Cela permet avantageusement d'abaisser la position du récipient de cuisson lorsqu'il est posé sur le bloc de chauffe en position retournée par-dessus l'embase, ce qui facilitera l'accès à l'ouverture supérieure du récipient de cuisson, par exemple pour mélanger les aliments durant leur cuisson. On entend par « encastrer » le fait d'insérer à l'intérieur du logement, d'une manière déterminée, la partie dédiée du bloc de chauffe en position retournée par-dessus l'embase, jusqu'à atteindre une position d'arrêt définie où le bloc de chauffe retourné prend appui sur ladite embase et est stabilisé, ce qui permet de poser sur ledit bloc de chauffe retourné un récipient sans risquer de le faire tomber.

Cette réduction de la hauteur de l'appareil de cuisson lorsque le bloc de chauffe est retourné et placé de manière stable par-dessus l'embase présente un autre intérêt. En effet, selon l'appareil de cuisson à air chaud objet de l'invention, ladite position retournée du bloc de chauffe par-dessus l'embase permet de définir une configuration de rangement dudit appareil de cuisson. Selon cette configuration de rangement, le bloc de chauffe est placé en position retournée par-dessus l'embase en encastrant une partie dédiée dudit bloc de chauffe dans le logement de ladite embase. La réduction de la hauteur de l'appareil de cuisson dans cette configuration de rangement permettra de le placer plus facilement sur une tablette dans un placard de cuisine ou sur une tablette d'une étagère, sans être gêné par sa hauteur.

Selon une réalisation de l'appareil de cuisson à air chaud, la partie dédiée du bloc de chauffe présente une forme déterminée de telle sorte que, en configuration de rangement dudit appareil, ladite partie dédiée du bloc de chauffe est apte à être insérée dans une ouverture supérieure d'un récipient placé dans le logement de l'embase. Cela permet avantageusement de laisser le récipient dans le logement de l'embase afin d'éviter de le ranger séparément, tout en permettant malgré tout de réduire la hauteur dudit appareil de cuisson afin de faciliter son rangement.

Selon une réalisation de l'appareil de cuisson à air chaud, l'embase comprend un contour muni d'un bord supérieur et le bloc de chauffe comprend une portion supérieure comprenant une zone de rétrécissement qui définit un épaulement sur le contour dudit bloc de chauffe. Cet épaulement prend appui sur le bord supérieur du contour de l'embase lorsque le bloc de chauffe est en position retournée et encastrée dans l'embase.

Selon cette réalisation, le contour du bloc de chauffe comprend un bord inférieur prenant appui sur le bord supérieur du contour de l'embase lorsque l'appareil de cuisson est placé dans sa première configuration fonctionnelle. En outre, un dispositif d'accrochage est mis en oeuvre entre le bord supérieur sur l'embase et le bord inférieur sur le bloc de chauffe de sorte à maintenir l'appareil de cuisson dans sa première configuration fonctionnelle.

Selon une réalisation de l'appareil de cuisson à air chaud, le bloc de chauffe comprend une face supérieure munie d'une poignée de préhension. Cette poignée de préhension facilite la manipulation du bloc de chauffe pour son passage de la configuration fonctionnelle à la configuration de rangement, et inversement.

Selon une réalisation de l'appareil de cuisson à air chaud, le bloc de chauffe est apte à être placé directement sur une ouverture supérieure d'un récipient de cuisson indépendamment de ladite embase. Ainsi, le bloc de chauffe peut être retiré de l'embase et placé directement sur un récipient de cuisson qui est disposé sur un plan de table ou de cuisine. Ce récipient de cuisson peut être apte à être placé dans le logement de l'embase de l'appareil de cuisson ou, au contraire, être d'une conception quelconque, c'est-à-dire non adaptée audit logement, mais tout de même apte à recevoir le bloc de chauffe ; il peut par exemple s'agir d'une casserole ou d'un faitout.

Selon une réalisation préférentielle de l'appareil de cuisson à air chaud, l'embase comprend une ouverture frontale communiquant avec le logement et apte à autoriser le passage du récipient de cuisson pour son insertion dans ledit logement et son retrait de celui-ci lorsque l'appareil de cuisson est dans sa première configuration fonctionnelle. En outre, l'embase comprend deux parois latérales munies chacune d'un bord libre contigu à l'ouverture frontale et d'une découpe transversale sur ladite paroi latérale et débouchant sur ledit bord libre. Chacune desdites découpes est apte à recevoir un élément de préhension du récipient de cuisson de manière à conserver l'accès manuel à chaque élément de préhension dudit récipient de cuisson par lesdites parois latérales au cours de l'insertion ou du retrait du récipient de cuisson dudit logement.

Cette conception de l'appareil de cuisson à air chaud permet de placer directement les aliments à cuire dans un récipient de cuisson qui est utilisé non seulement sur l'appareil de cuisson dans sa première configuration fonctionnelle pour réaliser ladite cuisson au moyen de l'air chaud circulant dans ledit récipient cuisson grâce au bloc de chauffe, mais aussi pour réaliser directement le service à table sans nécessiter de transvider les aliments cuits dans un plat de service additionnel. D'une part, cela permet de réduire la quantité de vaisselle à laver. D'autre part, l'absence de transfert des aliments cuits dans un plat de service et l'utilisation directe du récipient de cuisson qui vient d'être utilisé pour la cuisson et dont la paroi est encore chaude, permettent de conserver les aliments cuits bien chauds jusqu'à leur service dans les assiettes. Par ailleurs, la présence permanente de cette ouverture frontale sur l'embase permet de réduire la quantité de matière nécessaire pour la conception de l'appareil de cuisson, ce qui réduit son coût total de fabrication. En fin d'utilisation de l'appareil de cuisson, le récipient de cuisson peut être rangé avec d'autres ustensiles de cuisson voire demeurer dans le logement de l'embase, selon le mode de réalisation de l'appareil de cuisson, et l'appareil de cuisson peut être mis en configuration de rangement précitée si celle-ci est prévue sur ledit appareil de cuisson.

Selon cette réalisation de l'appareil de cuisson à air chaud, les découpes sont aptes à permettre le passage des éléments de préhension du récipient de cuisson en les laissant dépasser à l'extérieur des parois latérales lorsque ledit récipient de cuisson est inséré dans le logement. Ainsi, les éléments de préhension du récipient de cuisson peuvent être maintenus correctement depuis l'extérieur de l'embase, durant toute la manipulation dudit récipient de cuisson.

De préférence, selon cette réalisation de l'appareil de cuisson à air chaud, les découpes sont aptes à supporter les éléments de préhension du récipient de cuisson lorsque ledit récipient de cuisson est inséré dans le logement. Cela permet d'utiliser des récipients de hauteurs différentes avec l'appareil de cuisson. On pourrait toutefois prévoir en variante un socle sur l'embase, ledit socle supportant le récipient de cuisson tandis que les éléments de préhension sont simplement glissés dans les découpes sur les parois latérales de l'embase. Cette variante conditionne toutefois la hauteur du récipient qui doit être adaptée pour pouvoir glisser les éléments de préhension dans les découpes lorsque le récipient repose sur le socle.

De préférence, selon cette réalisation de l'appareil de cuisson à air chaud, l'embase comprend un socle agencé sous l'ouverture frontale et le logement. En outre, le socle comprend un système de guidage apte à aligner en hauteur les éléments de préhension du récipient de cuisson avec les découpes en début d'insertion du récipient de cuisson par l'ouverture frontale. Cela facilite l'introduction du récipient dans le logement en positionnant correctement les éléments de préhension du récipient vis-à-vis des découpes sur les parois latérales, de manière intuitive. Selon une réalisation, ce système de guidage comprend au moins une rampe de guidage, de préférence trois rampes de guidage.

De préférence, selon cette réalisation de l'appareil de cuisson à air chaud, celui-ci comprend un dispositif d'élévation apte à rehausser le récipient de cuisson placé dans le logement de sorte à rapprocher le récipient de cuisson vers le bloc de chauffe.

De préférence, selon cette réalisation de l'appareil de cuisson à air chaud, les parois latérales de l'embase comprennent chacune sur leur face interne au moins un élément de support apte à recevoir un élément d'appui d'un ustensile de cuisson en maintenant ledit ustensile de cuisson écarté du bloc de chauffe. Ainsi, selon cette réalisation, l'appareil de cuisson est conçu pour recevoir avant tout un récipient de cuisson, mais aussi un ou plusieurs autres ustensiles de cuisson, comme cela apparaitra ci-après. De préférence, selon cette réalisation, les faces internes des parois latérales comprennent chacune au moins deux éléments de support agencés à des hauteurs différentes sur chacune desdites faces internes, lesdits éléments de support étant aptes à recevoir l'un ou l'autre un élément d'appui d'un ustensile de cuisson en le maintenant écarté du bloc de chauffe selon au moins deux hauteurs différentes, ledit bloc étant en position normale, dans la première configuration fonctionnelle de l'appareil de cuisson. Ainsi, l'appareil de cuisson comprend au moins deux positions d'écartement de l'ustensile de cuisson par rapport au bloc de chauffe, lors de son positionnement dans le logement.

L'invention concerne également un système de cuisson comprenant un appareil de cuisson à air chaud présentant l'une ou l'autre des caractéristiques précitées et un kit d'accessoires de cuisson comprenant au moins un récipient de cuisson muni d'une ouverture supérieure et d'un fond, ledit au moins un récipient de cuisson étant apte à être placé dans le logement dans la première configuration fonctionnelle de l'appareil de cuisson de sorte que son ouverture supérieure soit en regard du dispositif de chauffe et à être supporté par le bloc de chauffe en position retournée par-dessus l'embase de sorte que son fond soit exposé au dispositif de chauffe, dans la deuxième configuration fonctionnelle.

Selon une réalisation du système de cuisson, l'appareil de cuisson à air chaud mis en oeuvre comprend une ouverture frontale et des découpes sur les parois latérales de ladite embase, telles que précitées. En outre, l'au moins un récipient de cuisson est muni de deux éléments de préhension, ledit au moins un récipient de cuisson étant apte à être inséré dans le logement de l'embase de l'appareil de cuisson à air chaud en passant par l'ouverture frontale de manière à placer les deux éléments de préhension respectivement dans les deux découpes sur les parois latérales de ladite embase.

Selon le système de cuisson objet de l'invention, un dispositif d'étanchéité est mis en oeuvre entre l'ouverture supérieure de l'au moins un récipient de cuisson et le bloc de chauffe lorsque ledit au moins un récipient de cuisson est inséré dans le logement et que l'appareil de cuisson est dans sa première configuration fonctionnelle. La présence de ce dispositif d'étanchéité permet d'assurer une circulation de l'air chaud dans le récipient grâce au bloc de chauffe, en évitant l'échappement de cet air chaud au niveau de la jonction entre l'ouverture supérieure du récipient et le bloc de chauffe. On peut toutefois envisager des variantes sans ce dispositif d'étanchéité, l'ouverture supérieure du récipient étant dans ce cas placée à proximité du bloc de chauffe pour concentrer la circulation de l'air chaud dans le récipient en limitant les fuites d'air chaud par l'espacement laissé entre l'ouverture supérieure du récipient et le bloc de chauffe. De préférence, ce dispositif d'étanchéité précité comprend un joint d'étanchéité agencé sur un bord de l'ouverture supérieure de l'au moins un récipient de cuisson ou sur un bord d'une ouverture inférieure du bloc de chauffe.

Selon une réalisation du système de cuisson à air chaud, un dispositif de verrouillage est mis en oeuvre entre l'au moins un récipient de cuisson et l'embase de sorte à verrouiller le récipient de cuisson en position dans le logement. Cela permet d'éviter le retrait inopiné du récipient de cuisson en cours de cuisson.

Selon une réalisation du système de cuisson, l'au moins un récipient de cuisson est transparent. Cela permet une visualisation des aliments durant leur cuisson dans le récipient de cuisson, notamment pour surveiller ladite cuisson des aliments. On peut toutefois envisager un récipient de cuisson opaque.

Selon une réalisation du système de cuisson, le kit d'accessoires de cuisson comprend au moins un couvercle apte à être placé sur l'ouverture supérieure de l'au moins un récipient de cuisson soit lorsque ledit récipient est retiré du logement en fin de cuisson dans la première configuration fonctionnelle soit lorsque le récipient est posé sur le bloc de chauffe retourné, durant la cuisson dans la deuxième configuration fonctionnelle. Par exemple, le kit d'accessoires peut soit comprendre autant de couvercles que de récipients de cuisson, les couvercles étant adaptés aux récipients de cuisson, soit comprendre un seul couvercle adapté à tous les récipients de cuisson. Un tel couvercle permet de maintenir les aliments au chaud une fois cuits et le récipient de cuisson placé sur la table, dans l'attente du service dans les assiettes.

Selon une réalisation du système de cuisson, l'appareil de cuisson à air chaud comprend les caractéristiques précitées consistant à prévoir sur chacune des faces internes des parois latérales de l'embase au moins un élément de support. En outre, le kit d'accessoires de cuisson comprend au moins un ustensile de cuisson complémentaire à l'au moins un récipient de cuisson, chaque ustensile de cuisson comprenant deux éléments d'appui aptes à reposer sur les au moins un élément de support des faces internes des deux parois latérales de l'embase, afin de maintenir ledit au moins un ustensile de cuisson dans le logement de l'embase avec un écartement par rapport au bloc de chauffe. Ainsi, les fonctions de cuisson de l'appareil de cuisson peuvent être étendues encore plus, en comparaison des appareils de cuisson traditionnels. L'au moins un ustensile de cuisson est notamment choisi parmi une grille, une plaque et un moule rigide plat muni d'empreintes ; d'autres ustensiles de cuisson pourraient toutefois être envisagés dans le cadre de l'invention.

### Brève description des figures

Les caractéristiques et avantages de l'invention apparaîtront à la lecture de la description suivante s'appuyant sur des figures, parmi lesquelles :
[Fig. 1] La figure 1 illustre une vue d'ensemble d'un appareil de cuisson selon l'invention dans la première configuration fonctionnelle, avec un récipient de cuisson placé dans le logement de l'embase ;
[Fig. 2] La figure 2 illustre une vue d'ensemble d'un appareil de cuisson selon l'invention en configuration de rangement ;
[Fig. 3] La figure 3 illustre une vue d'ensemble de l'appareil de cuisson en cours de transformation de la première configuration fonctionnelle illustrée en figure 1 vers la configuration de rangement illustrée en figure 2 ;
[Fig. 4] La figure 4 illustre un bloc de chauffe de l'appareil de cuisson selon un mode de réalisation ;
[Fig. 5] La figure 5 illustre un dispositif de verrouillage du récipient de cuisson placé dans le logement de l'embase et un dispositif d'accrochage du bloc de chauffe sur l'embase dans la première configuration fonctionnelle de l'appareil de cuisson ;
[Fig. 6] La figure 6 illustre le dispositif de verrouillage entre le récipient de cuisson et l'embase avant sa mise en place ;
[Fig. 7] La figure 7 illustre le dispositif de verrouillage de la figure 6, en cours de mise en place ;
[Fig. 8] La figure 8 illustre le dispositif de verrouillage des figures 6 et 7, mis en place ;
[Fig. 9] La figure 9 illustre partiellement un bloc de chauffe placé directement sur un récipient de cuisson ;
[Fig. 10] La figure 10 illustre un système de guidage sur le socle de l'embase représentée partiellement ;
[Fig. 11] La figure 11 illustre un ustensile de cuisson du type grille ;
[Fig. 12] La figure 12 illustre une variante d'un appareil de cuisson selon lequel le bloc de chauffe est en configuration de rangement et inséré en partie dans un récipient lui-même placé dans le logement de l'embase dudit appareil de cuisson ;
[Fig. 13] La figure 13 illustre une variante de l'appareil de cuisson dans la deuxième configuration fonctionnelle, le bloc de chauffe en position retournée par-dessus l'embase supporte un récipient de cuisson.

### Description détaillée de l'invention

Dans la suite de la description, le terme appareil est utilisé pour désigner un appareil de cuisson à air chaud selon l'invention. De même, le terme récipient est utilisé pour désigner un récipient de cuisson. En outre, les mêmes références sont utilisées pour désigner les caractéristiques identiques ou équivalentes selon les diverses variantes de réalisation de l'appareil et du récipient.

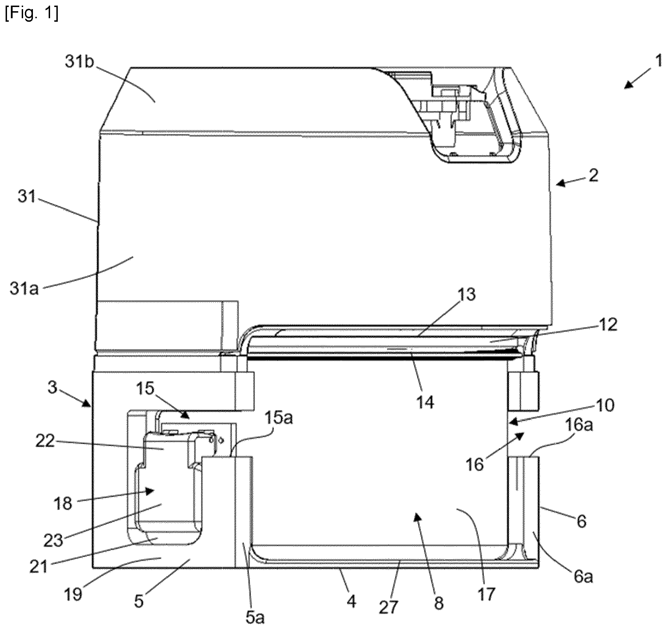

Les termes « supérieur » et « inférieur » sont utilisés dans la présente description en considération de la position normale des éléments de l'appareil placé en première configuration fonctionnelle, telle qu'illustrée en figure 1, ledit appareil étant placé face à l'utilisateur sur une table ou un plan de cuisine.

Comme illustré sur les figures 1 à 3, l'appareil 1 comprend dans sa partie supérieure un bloc de chauffe 2 et dans sa partie inférieure une embase 3. L'embase 3 comprend un socle 4, deux parois latérales 5, 6, une paroi de fond 7 et une ouverture frontale 8. Les parois latérales 5, 6 comprennent chacune un bord libre 5a, 6a, lesdits bords libres 5a, 6a étant contigus à l'ouverture frontale 8. Ainsi, l'embase 3 définit un logement 9 situé en-dessous du bloc de chauffe 2. Ce logement 9 permet la réception d'un récipient 10, comme cela sera détaillé ensuite.

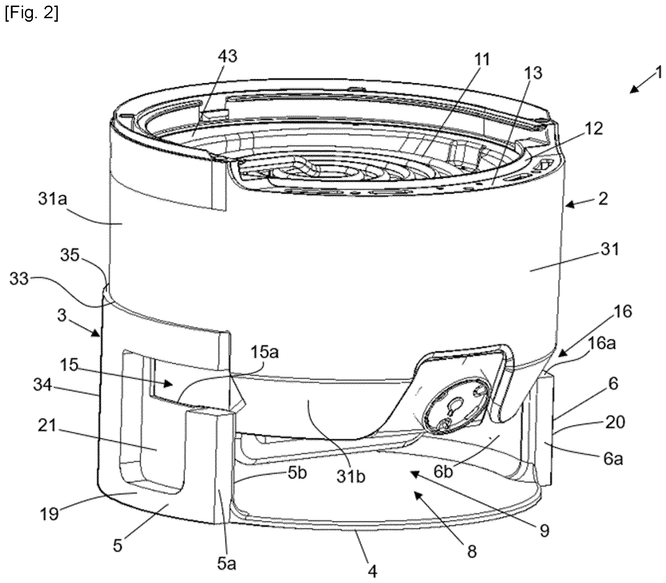

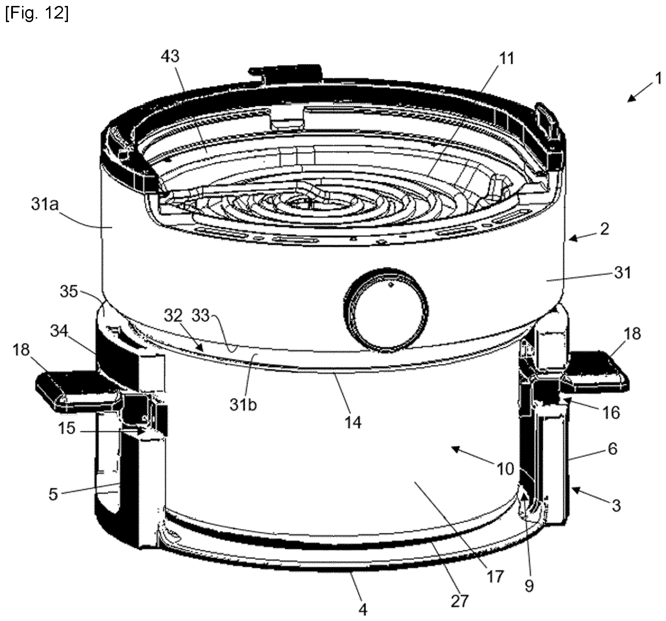

Lorsque l'appareil 1 est dans une première configuration fonctionnelle telle qu'illustrée en figure 1, le bloc de chauffe 2 permet de faire circuler de l'air chaud vers le bas en direction du logement 9 de sorte que lorsque le récipient 10 est placé dans ledit logement 9, ledit air chaud circule dans ledit récipient 10. Le bloc de chauffe 2 est conçu pour faire circuler en cycle cet air chaud de sorte à le réchauffer et le renvoyer dans ledit récipient 10 disposé sous ledit bloc de chauffe 2. Ce bloc de chauffe 2 comprend une entrée d'air 42, un dispositif de chauffe de l'air 11 du type résistif (figure 2 et 12) et un dispositif de circulation d'air chaud du type ventilateur (non illustré), comme cela existe déjà traditionnellement sur les appareils de cuisson à air chaud du type friteuse à air chaud.

A la différence des appareils de cuisson traditionnels qui prévoient de placer une cuve et éventuellement un panier dans une enceinte de cuisson fermée, l'appareil 1 selon l'invention prévoit préférentiellement d'assurer une étanchéité entre le bloc de chauffe 2 et le récipient 10 lorsque celui-ci est placé dans le logement 9 sur l'embase 3, afin d'éviter que l'air chaud circulant dans le récipient 10 ne s'échappe par le haut dudit récipient 10. Pour cela un joint d'étanchéité 12 peut être placé sur un bord inférieur 13 du bloc de chauffe 2 de sorte à coopérer avec un bord supérieur 14 du récipient 10. Ce bord supérieur 14 définit une ouverture supérieure sur le récipient 10 permettant l'insertion et le retrait des aliments et par laquelle pénètre l'air chaud. Cette mise en place du joint d'étanchéité 12 sur le bloc de chauffe 2 sera préférée lorsque plusieurs récipients 10 présentant des contenances différentes et/ou conçus dans des matières différentes (inox, verre transparent ou opaque, aluminium ...) sont utilisables avec ledit appareil 1. On peut aussi envisager de placer ce joint d'étanchéité 12 sur le bord supérieur 14 du récipient 10 plutôt que sur le bord inférieur 13 du bloc de chauffe 2. Ce joint d'étanchéité 12 sera de préférence amovible pour faciliter le nettoyage, voire pour le positionner sur l'un ou l'autre des récipients 10 utilisables avec ledit appareil 1, dans la variante où lesdits récipients 10 sont conçus pour recevoir un tel joint d'étanchéité 12.

Des variantes sont aussi envisageables sans étanchéité entre le récipient 10 et le bloc de chauffe 2 de l'appareil 1, en conservant un léger écart entre le bord supérieur 14 du récipient 10 et le bord inférieur 13 du bloc de chauffe 2. Dans ce cas, l'air chaud circulant dans le récipient 10 sous l'action du bloc de chauffe 2 pourra s'échapper en partie par ledit écart laissé entre lesdits bords 13, 14.

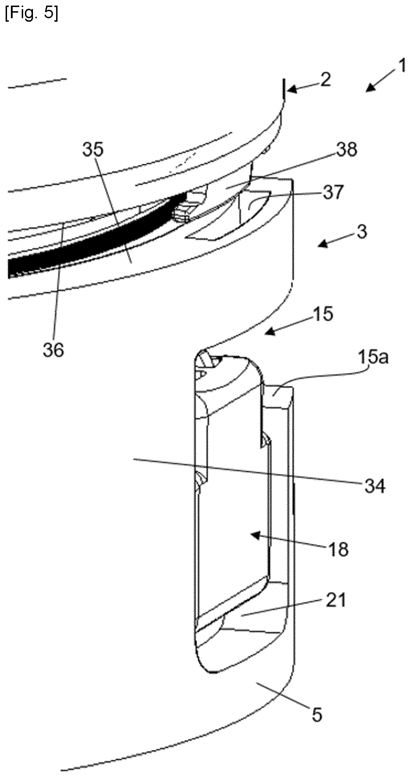

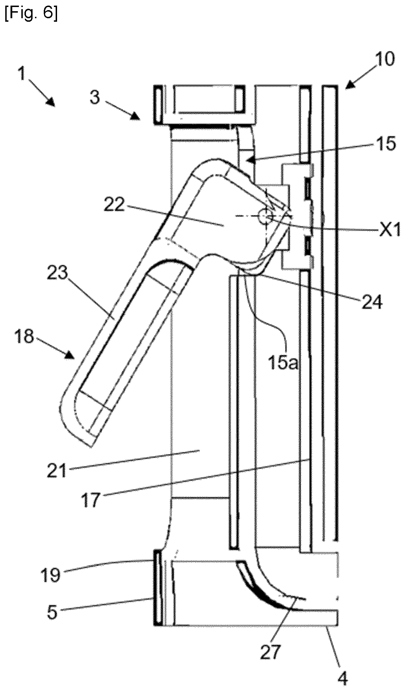

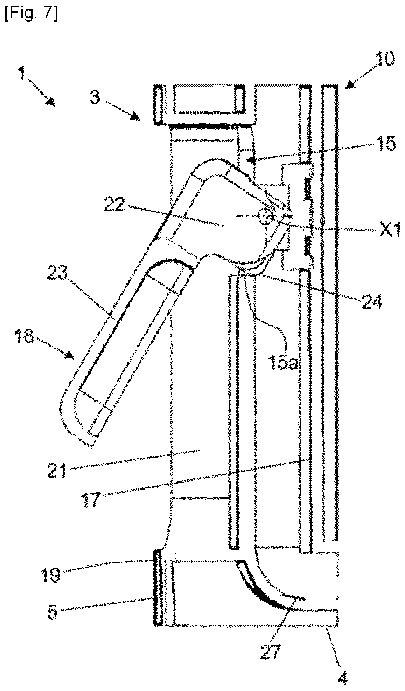

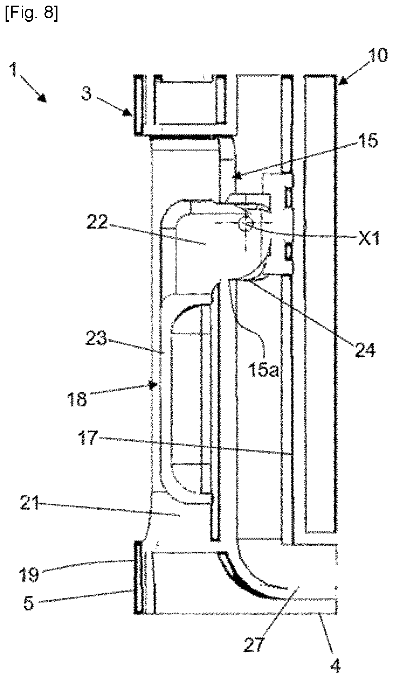

Comme illustré sur les figures 1 à 3 et 5 à 8, les parois latérales 5, 6 de l'embase 3 comprennent chacune une découpe 15, 16. Les deux découpes 15, 16 sont agencées transversalement sur les parois latérales 5, 6 et débouchent sur les bords libres 5a, 6a desdites parois latérales 5, 6. Le récipient 10 comprend sur son contour 17 deux éléments de préhension 18 disposés en opposition sur ledit contour 17. Un seul élément de préhension 18 est illustré sur les figures 1 et 5 à 8, mais le principe est identique pour le deuxième qui est disposé du côté opposé sur le récipient 10. Ces éléments de préhension 18 sont montés à pivotement selon un axe X1 sur le contour 17 du récipient 10 afin de pouvoir pivoter d'une position déployée en équerre vis-à-vis dudit contour 17, telle qu'illustrée en figure 6, vers une position rabattue contre la paroi de contour 17, telle qu'illustrée en figure 8. Les parois latérales 5, 6 de l'embase 3 comprennent chacune sur leurs faces externes 19, 20 une cavité 21, 21'. Les découpes 15, 16 présentent préférentiellement la forme d'une fente permettant d'y introduire un élément de préhension 18 en position déployée, ce qui permet d'insérer le récipient 10 dans le logement 9 en passant par l'ouverture frontale 8. Les découpes 15, 16 pourront être légèrement évasées au niveau des bords libres 5a, 6a des parois latérales 5, 6 de sorte à faciliter l'introduction des éléments de préhension 18 en position déployée. Une fois le récipient 10 placé dans le logement 9 sous le bloc de chauffe 2, les éléments de préhension 18 dépassent des découpes 15, 16 et sont accessibles par l'extérieur des parois latérales 5, 6, ce qui permet de saisir correctement ces éléments de préhension 18 durant l'insertion du récipient 10 dans le logement 9 et son retrait de celui-ci. Bien entendu, le diamètre du contour 17 et/ou la longueur des éléments de préhension 18 sur le récipient 10 sont adaptés en fonction du logement 9 et de l'écartement entre les deux parois latérales 5, 6 sur l'embase 3. Ces éléments de préhension 18 peuvent alors être pivotés de la position déployée illustrée en figure 6 vers la position rabattue illustrée en figure 8, selon laquelle lesdits éléments de préhension 18 viennent se loger dans les cavités 21, 21' sur les parois latérales 5, 6. Les cavités 21, 21' forment ainsi des butées qui empêchent de dégager les éléments de préhension 18 du récipient 10 en position rabattue. Cela permet de garantir le maintien du récipient 10 en position dans le logement 9 durant le fonctionnement du bloc de chauffe 2.

Comme illustré sur les figures 6 à 8, les éléments de préhension 18 présentent un corps 22 prolongé par une poignée 23, le corps 22 et la poignée formant sensiblement un « L ». Le corps est monté en pivot d'axe X1 vis-à-vis du contour 17 du récipient 10, tel que précisé précédemment. Les corps 22 des éléments de préhension 18 prennent appui sur les faces inférieures 15a, 16a des découpes 15, 16, ce qui permet aux parois latérales 5, 6 de supporter le récipient 10 inséré dans le logement 9. La forme du corps 22 permet de définir sur celui-ci une came 24 qui prend appui sur la face inférieure 15a, 16a de la découpe 15, 16. Les faces inférieures 15a, 16a des découpes 15, 16 ainsi que la came 24 définissent ainsi un dispositif d'élévation 24, 15a, 16a. Lors du pivotement des éléments de préhension 18 de la position déployée illustrée en figure 6 jusqu'à la position rabattue illustrée en figure 8 où la poignée est logée dans la cavité 21, les cames 24 permettent de déplacer vers le haut le récipient 10 de sorte à venir positionner son bord supérieur 14 contre le bord inférieur 13 du bloc de chauffe 2, entre lesquels se situe le joint d'étanchéité 12, comme le montre la figure 1. Inversement, le passage de la position rabattue à la position déployée permet d'abaisser le récipient 10 pour le dégager du bloc de chauffe 2, permettant alors de saisir les éléments de préhension 18 en position déployée et d'extraire le récipient 10 du logement 9 de l'embase 3.

D'autres caractéristiques sont envisageables sur l'appareil 1 afin d'élever le récipient 10 dans le logement 9 de l'embase 3 et de rapprocher le bord supérieur 14 du récipient 10 du bord inférieur 13 du bloc de chauffe 2, indépendamment de la présence d'une came 24 sur le corps 22 de chacun des éléments de préhension 18. En effet, il est possible de prévoir des rampes d'élévation (non illustrées) inclinées vers le haut et agencées directement sur les faces inférieures 15a, 16a des découpes 15, 16, les corps 22 des éléments de préhension 18 prenant appui sur ces rampes durant l'insertion du récipient 10 dans le logement 9, permettant ainsi de rehausser ledit récipient 10.

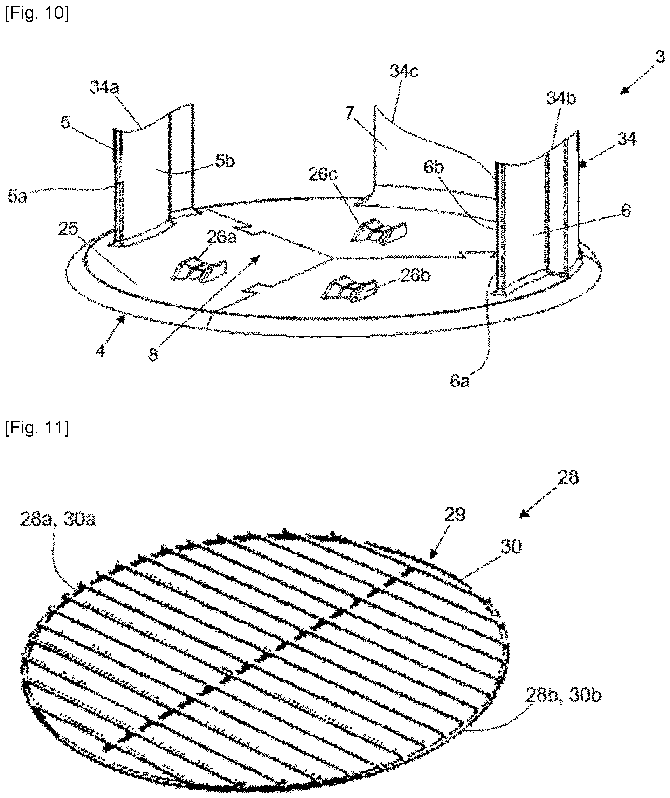

Comme illustré sur la figure 10, le socle 4 de l'embase 3 peut également comporter sur sa face supérieure 25 un système de guidage comprenant des rampes de guidage 26a, 26b, 26c, de préférence trois rampes de guidage 26a, 26b, 26c réparties en triangle, deux de ces rampes de guidage 26a, 26b étant disposées vers l'avant au niveau de l'ouverture frontale 8 et la troisième rampe de guidage 26c étant disposée à proximité de la paroi de fond 7, comme le montre la figure 10. Ces rampes de guidage 26a, 26b, 26c trouvent particulièrement leur utilisation avec un récipient 10 adapté, comme sur la figure 1, pour lequel lors de l'insertion dudit récipient 10 dans le logement 9, le fond 27 du récipient 10 prend d'abord appui sur les deux premières rampes de guidage 26a, 26b puis également sur la troisième rampe de guidage 26c de sorte à positionner les éléments de préhension 18 en regard des découpes 15, 16 afin qu'ils ne butent pas contre les bords libres 5a, 6a des parois latérales 5, 6 au moment de l'insertion du récipient 10 dans le logement 9.

D'autres caractéristiques sont envisageables sur l'appareil 1 afin de verrouiller les éléments de préhension 18 en position dans les découpes 15, 16 et d'assurer ainsi un verrouillage du récipient 10 en position dans le logement 9. En effet, l'appareil 1 peut par exemple comprendre un dispositif de verrouillage (non illustré) comportant deux pièces de blocage qui sont articulées sur les parois latérales 5, 6 pour être déplacées manuellement ou en actionnant des organes de manoeuvre agissant respectivement sur lesdites pièces de blocage, dans une première position où les pièces de blocage sont dégagées des découpes 15, 16 pour y faire pénétrer les éléments de préhension 18 et dans une deuxième position où lesdites pièces de blocage ferment les découpes 15, 16 au niveau des bords libres 5a, 6a des parois latérales 5, 6 pour constituer des butées empêchant l'extraction des éléments de préhension 18 desdites découpes 15, 16. Selon cette variante, les éléments de préhension 18 pourraient être fixes sur le contour 17 du récipient 10 ou, au contraire, articulés comme précédemment dans le but de pouvoir élever le récipient dans le logement grâce à la présence des cames 24.

Des caractéristiques additionnelles sont envisageables sur l'appareil 1 afin de permettre son utilisation avec un ustensile de cuisson 28 disposé en lieu et place du récipient 10 dans le logement 9. Par exemple, cet ustensile de cuisson 28 peut être une grille 29, illustrée en figure 11, pour la réalisation de grillades, mais on pourrait envisager une plaque pour la réalisation de quiches ou de pizzas, voire un moule comportant une surface rigide plane sur laquelle sont agencées une ou des empreintes. Un tel ustensile de cuisson 28 sera disposé dans le logement 9 et supporté par les parois latérales 5, 6, voire aussi par la paroi de fond 7. Pour cela, les faces internes 5b, 6b des parois latérales 5, 6 comporteront des éléments de support (non illustrés) par exemple sous la forme de nervures transversales sur lesdites parois latérales 5, 6, ledit ustensile de cuisson 28 comprenant sur ses côtés latéraux deux éléments d'appui 28a, 28b qui prendront appui sur ces nervures lorsque l'ustensile 28 est placé dans le logement 9, en correspondance avec lesdites nervures. Par exemple, deux portions 30a, 30b opposées du contour 30 de la grille 29 viendront en appui sur les deux nervures agencées à une même hauteur sur les faces internes 5b, 6b des parois latérales 5, 6. Plusieurs nervures peuvent être agencées transversalement à différentes hauteurs sur chacune des faces internes 5b, 6b des parois latérales 5, 6, par exemple deux ou trois nervures, voire plus, de sorte à permettre le positionnement de l'ustensile de cuisson 28 à différentes hauteurs à l'intérieur du logement 9, afin d'éloigner plus ou moins ledit ustensile de cuisson 28 vis-à-vis du bord inférieur 13 du bloc de chauffe 2. Le bloc de chauffe 2 sera utilisé différemment selon qu'un récipient 10 ou un ustensile de cuisson 28 est disposé dans le logement 9 de l'embase 3. En effet, le dispositif de chauffe 11 et le dispositif de circulation d'air chaud du bloc de chauffe 2 sont utilisés concomitamment lorsqu'un récipient 10 est placé dans le logement 9. Tandis qu'avec un ustensile de cuisson 28 placé dans le logement 9, seul le dispositif de chauffe 11 du bloc de chauffe 2 pourra être utilisé.

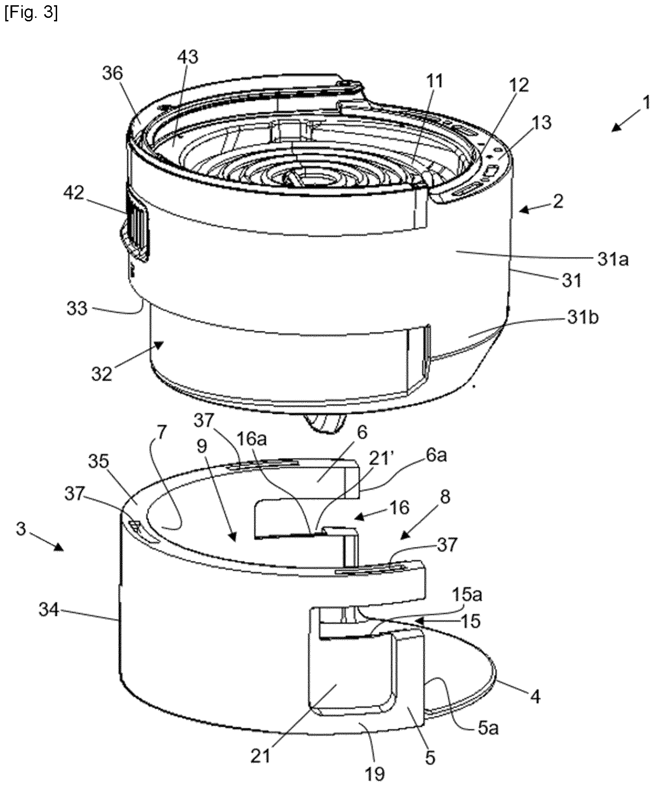

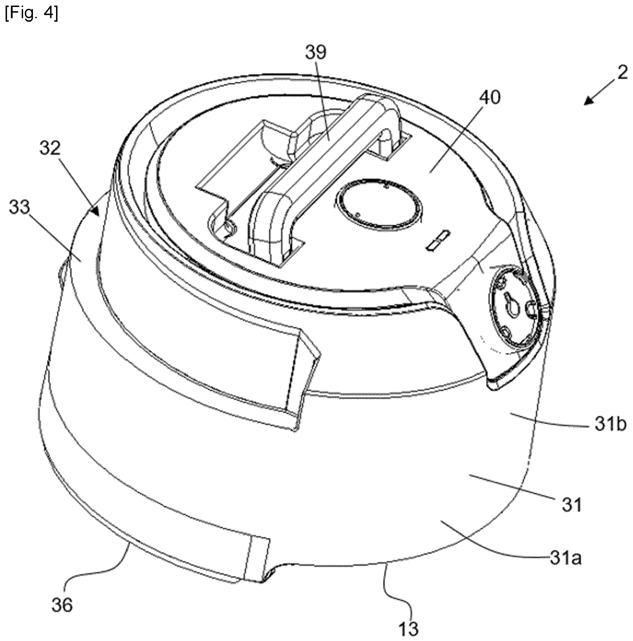

Comme illustré sur les figures 1 à 5, le bloc de chauffe 2 est amovible de l'embase 3. Le bloc de chauffe 2 comprend un contour 31 qui comprend une première portion 31a et une deuxième portion 31b. Une zone de rétrécissement 32 est agencée sur une partie de la deuxième portion 31b du contour 31 telles que le montrent les figures 3 et 4, ce qui permet de définir un épaulement 33 entre la première portion 31a et la deuxième portion 31b. La première portion 31a est disposée en partie inférieure et la deuxième portion 31b est disposée en partie supérieure lorsque le bloc de chauffe 2 est disposé à l'endroit, dans la première configuration fonctionnelle de l'appareil 1. L'embase 3 comporte un contour 34 qui incorpore les parois latérales 5, 6 et la paroi de fond 7. Sur les figures 1 à 3, ce contour 34 de l'embase 3 est en une seule pièce, mais on pourrait prévoir un contour 34 en trois pièces 34a, 34b, 34c constituant les deux parois latérales 5, 6 et la paroi de fond 7 de l'embase 3, comme le montre la figure 10. Le contour 34 de l'embase 3 comprend un bord supérieur 35 sur lequel prend appui un bord inférieur 36 sur le bloc de chauffe 2 lorsqu'il est positionné normalement sur l'embase 3, dans la première configuration fonctionnelle de l'appareil 1. Le bord supérieur 35 du contour 34 comprend des encoches 37 et le bord inférieur 36 du bloc de chauffe 2 comprend des pattes 38 définissant un dispositif d'accrochage 37, 38. Les pattes 38 s'engagent respectivement dans les encoches 37 afin d'accrocher le bloc de chauffe 2 avec l'embase 3 dans la première configuration fonctionnelle de l'appareil 1. Les pattes 38 peuvent venir en prise dans les encoches 37, par exemple en effectuant un léger encliquetage desdites pattes 38 dans lesdites encoches 37 lors de leur engagement. On pourrait au contraire prévoir d'actionner ces pattes 38, par exemple en prévoyant un mécanisme de transmission (non illustré) agencé entre lesdites pattes 38 et une poignée de préhension 39 agencée sur la face supérieure 40 du bloc de chauffe 2, cette poignée de préhension 39 permettant en outre la manipulation du bloc de chauffe 2 pour le dégager de l'embase 3 ou le placer sur celle-ci.

Comme illustré sur les figures 1 à 4, le bloc de chauffe 2 peut être placé en position retournée une fois celui-ci dégagé de l'embase 3, puis être placé par-dessus ladite embase 3 avec une orientation précise afin de pouvoir loger la zone de rétrécissement 32 à l'intérieur du contour 34 de l'embase 3, jusqu'à ce que l'épaulement 33 vienne en appui contre le bord supérieur 35 dudit contour 34 de l'embase 3, ce qui permet d'insérer la deuxième portion 31b du bloc de chauffe 2 dans le logement 9 de l'embase 3. Cela permet de définir une deuxième configuration fonctionnelle et une configuration de rangement de l'appareil 1 selon laquelle le bloc de chauffe 2 est en position retournée avec sa deuxième portion 31b disposée en-dessous du bord supérieur 35 du contour 34 de l'embase 3 et en partie encastrée dans le logement 9 de l'embase 3, la hauteur de l'appareil 1 en configuration de rangement étant ainsi inférieure à celle dudit appareil 1 en configuration fonctionnelle. Cet encastrement assure une stabilisation convenable du bloc de chauffe 2 en position retournée par-dessus l'embase 3. La deuxième configuration fonctionnelle de l'appareil 1 sera expliquée plus en détail ci-après.

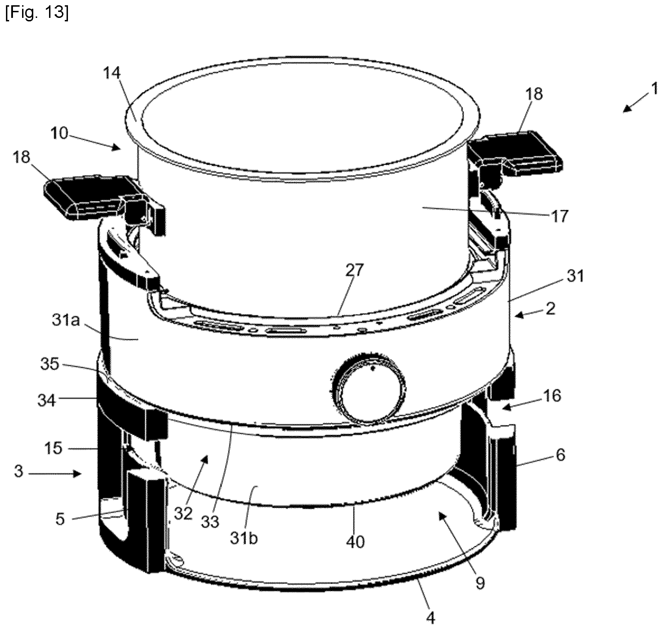

Sur les figures 12 et 13 est illustrée une variante de l'appareil 1, laquelle comporte des caractéristiques comparables à celles présentées précédemment en regard des figures 1 à 11, la différence essentielle portant sur la forme de la deuxième portion 31b du contour 31 du bloc de chauffe 2 qui est plus petite que le diamètre du contour 17 du récipient 10, ce qui permet lorsque ledit bloc de chauffe 2 est en position retournée, c'est-à-dire en configuration de rangement ou dans la deuxième configuration fonctionnelle, d'insérer ladite deuxième portion 31b dans le récipient 10 en le conservant en position dans le logement 9 de l'embase 3.

Comme illustré sur les figures 2, 3 et 13, selon les diverses variantes de conception de l'appareil 1, le bloc de chauffe 2 comprend des moyens de support formés par un bord périphérique 43 qui, lorsque ledit bloc de chauffe 2 est en position retournée et stabilisé par-dessus l'embase 3, permet de recevoir le fond 27 du récipient 10, comme le montre la figure 13 (cela étant valable également pour le cas des figures 2 et 3). Ainsi, le bloc de chauffe 2 en position retournée peut supporter le récipient 10 en plaçant le fond 27 dudit récipient 10 à proximité du dispositif de chauffe 11, permettant alors de chauffer ledit récipient 10 par le fond 27 pour la cuisson d'aliment selon une deuxième configuration fonctionnelle.

L'invention concerne également un système de cuisson qui comprend un appareil 1 présentant les caractéristiques précitées et un kit d'accessoires qui comprend au moins un récipient 10. De préférence, le kit d'accessoires comprendra plusieurs récipients 10 qui pourront avoir des hauteurs de contour 17 différentes et/ou être conçus dans des matériaux différents, par exemple en verre transparent, en verre opaque, en inox, en aluminium voire d'autres matériaux avec un revêtement adapté pour la cuisson d'aliments. Le kit d'accessoires pourra aussi comporter un ou plusieurs couvercles (non illustrés) adaptés aux divers récipients de sorte à couvrir le récipient 10 une fois celui-ci extrait du logement 9 et de pouvoir conserver la chaleur dans ledit récipient 10 contenant les aliments cuits. Ce kit d'accessoires pourra aussi comporter des ustensiles de cuisson 28 tels que présentés précédemment, dans une version adaptée de l'appareil 1.

D'autres variantes sont envisageables dans le cadre de l'invention. Par exemple, les éléments de préhension 18 pourront être d'une forme différente et les découpes 15, 16 sur les parois latérales 5, 6 pourront avoir une forme différente de celle d'une fente de sorte à les adapter auxdits éléments de préhension 18.

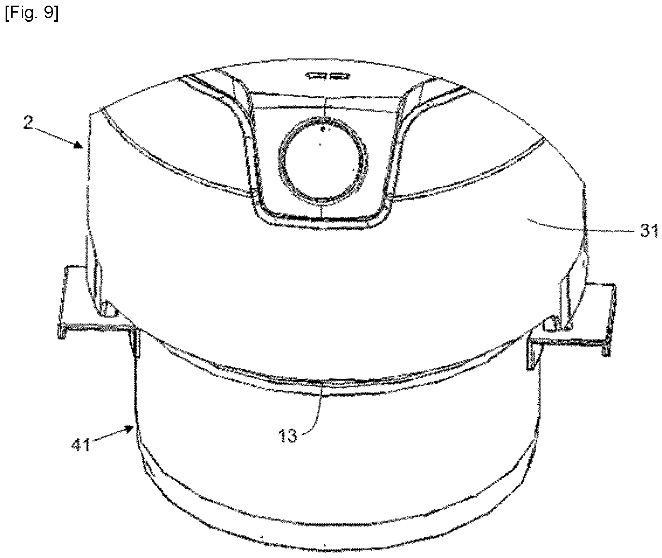

Dans une variante apparaissant sur la figure 9, le bloc de chauffe 2 amovible peut être placé directement sur d'autres types de récipients de cuisson 41 présentant un diamètre adapté, par exemple une casserole ou un faitout. Ainsi, le kit d'accessoires peut comporter de tels récipients de cuisson 41 en complément du ou des récipients 10 prévus pour être insérés dans le logement 9 de l'embase 3. Dans cette variante de l'appareil 1, le joint d'étanchéité 12 sera préférentiellement mis en oeuvre sur le bord inférieur 13 du bloc de chauffe 2. Ces récipients de cuisson 41 de type casserole et faitout, voire autre, permettront la réception du bloc de chauffe 2 sans pour autant être adaptés pour être placés dans le logement 9 de l'embase 3. L'utilisateur pourrait ainsi placer ce bloc de chauffe 2 sur d'autres casseroles ou faitouts dont il dispose déjà dans sa cuisine et qui sont adaptés pour recevoir ledit bloc de chauffe 2.

## Revendications

1. Appareil de cuisson à air chaud (1), lequel comprend un bloc de chauffe (2) agencé en partie supérieure et une embase (3) agencée en partie inférieure, ledit bloc de chauffe comprenant un dispositif de chauffe (11) permettant de chauffer de l'air et un dispositif de circulation permettant de déplacer l'air chauffé et ladite embase (3) comprenant un logement (9) au-dessus duquel se monte le bloc de chauffe (2) pour définir une première configuration fonctionnelle de l'appareil de cuisson (1) selon laquelle ledit logement (9) est apte à recevoir un récipient de cuisson (10) muni d'une ouverture supérieure destinée à être disposée en regard du dispositif de chauffe (2), **caractérisé en ce que** le bloc de chauffe (2) est configuré pour être placé de manière stable en position retournée par-dessus l'embase (3) et comprend des moyens de support (43) aptes à recevoir un récipient de cuisson (10) en disposant un fond (27) dudit récipient (10) en regard du dispositif de chauffe (11), de sorte que l'appareil de cuisson (1) présente une deuxième configuration fonctionnelle permettant la cuisson d'aliments dans un récipient posé sur le bloc de chauffe retourné par-dessus l'embase et chauffant le fond dudit récipient.

2. Appareil de cuisson à air chaud (1) selon la revendication 1, dans lequel le bloc de chauffe comprend un contour configuré pour que, dans la position retournée du bloc de chauffe par-dessus l'embase (3), une partie dédiée dudit bloc de chauffe (2) soit encastrée dans le logement (9) de l'embase (3) de sorte à réduire la hauteur de l'appareil de cuisson dans la deuxième configuration fonctionnelle.

3. Appareil de cuisson à air chaud (1) selon la revendication 2, dans lequel ladite position retournée du bloc de chauffe par-dessus l'embase permet de définir une configuration de rangement dudit appareil de cuisson (1).

4. Appareil de cuisson à air chaud (1) selon la revendication 3, dans lequel la partie dédiée du bloc de chauffe (2) présente une forme déterminée de telle sorte que, en configuration de rangement dudit appareil (1), ladite partie dédiée du bloc de chauffe (2) est apte à être insérée dans une ouverture supérieure d'un récipient (10) placé dans le logement (9) de l'embase (3).

5. Appareil de cuisson à air chaud (1) selon l'une des revendication 1 à 4, dans lequel l'embase (3) comprend un contour (34) muni d'un bord supérieur (35) et le bloc de chauffe (2) comprend une portion supérieure (31b) comprenant une zone de rétrécissement (32) qui définit un épaulement (33) sur le contour (31) du bloc de chauffe (2), ledit épaulement (33) prenant appui sur ledit bord supérieur (35) lorsque ledit bloc de chauffe (2) est en position retournée et encastrée dans l'embase (3).

6. Appareil de cuisson à air chaud (1) selon la revendication 5, dans lequel le contour (31) du bloc de chauffe (2) comprend un bord inférieur (36) prenant appui sur le bord supérieur (35) du contour (34) de l'embase (3) lorsque l'appareil de cuisson (1) est placé dans sa première configuration fonctionnelle.

7. Appareil de cuisson à air chaud (1) selon la revendication 6, dans lequel un dispositif d'accrochage (37, 38) est mis en oeuvre entre le bord supérieur (35) sur l'embase (3) et le bord inférieur (36) sur le bloc de chauffe (2) de sorte à maintenir l'appareil de cuisson (1) dans sa première configuration fonctionnelle.

8. Appareil de cuisson à air chaud (1) selon l'une quelconque des revendications 1 à 7, dans lequel le bloc de chauffe (2) comprend une face supérieure (40) munie d'une poignée de préhension (39).

9. Appareil de cuisson à air chaud (1) selon l'une quelconque des revendications 1 à 8, dans lequel le bloc de chauffe (2) est apte à être placé directement sur une ouverture supérieure d'un récipient de cuisson (41) indépendamment de ladite embase (3).

10. Appareil de cuisson à air chaud (1) selon l'une quelconque des revendications 1 à 9, dans lequel l'embase (3) comprend une ouverture frontale (8) communiquant avec le logement (9) et apte à autoriser le passage du récipient de cuisson (10) pour son insertion dans ledit logement (9) et son retrait de celui-ci lorsque l'appareil de cuisson (1) est dans sa première configuration fonctionnelle, ladite embase (3) comprenant en outre deux parois latérales (5, 6) munies chacune d'un bord libre (5a, 6a) contigu à l'ouverture frontale (8) et d'une découpe (15, 16) transversale sur ladite paroi latérale (5, 6) et débouchant sur ledit bord libre (5a, 6a), chacune desdites découpes (15, 16) étant apte à recevoir un élément de préhension (18) du récipient de cuisson (10) de manière à conserver l'accès manuel à chaque élément de préhension (18) dudit récipient de cuisson (10) par lesdites parois latérales (5, 6) au cours de l'insertion ou du retrait du récipient de cuisson (10) dudit logement (9).

11. Appareil de cuisson à air chaud (1) selon la revendication 9, dans lequel les découpes (15, 16) sont aptes à supporter les éléments de préhension (18) du récipient de cuisson (10) lorsque ledit récipient de cuisson (10) est inséré dans le logement (9).

12. Appareil de cuisson à air chaud (1) selon l'une des revendications 10 ou 11, dans lequel l'embase (3) comprend un socle (4) agencé sous l'ouverture frontale (8) et le logement (9), le socle comprenant un système de guidage (26a, 26b, 26c) apte à aligner en hauteur les éléments de préhension (18) du récipient de cuisson (10) avec les découpes (15, 16) en début d'insertion du récipient de cuisson (10) par l'ouverture frontale (8).

13. Appareil de cuisson à air chaud (1) selon l'une quelconque des revendications 10 à 12, lequel comprend un dispositif d'élévation (24, 15a, 16a) apte à rehausser le récipient de cuisson (10) placé dans le logement (9) de sorte à rapprocher le récipient de cuisson (10) vers le bloc de chauffe (2).

14. Appareil de cuisson à air chaud (1) selon l'une quelconque des revendications 10 à 13, dans lequel les parois latérales (5, 6) de l'embase (3) comprennent chacune sur leur face interne (5b, 6b) au moins un élément de support apte à recevoir un élément d'appui (28a, 28b) d'un ustensile de cuisson (28) en maintenant ledit ustensile de cuisson (28) écarté du bloc de chauffe (2).

15. Système de cuisson comprenant un appareil de cuisson à air chaud (1) présentant les caractéristiques de l'une quelconque des revendications 1 à 14 et un kit d'accessoires de cuisson comprenant au moins un récipient de cuisson (10) muni d'une ouverture supérieure et d'un fond, ledit au moins un récipient de cuisson étant apte à être placé dans le logement dans la première configuration fonctionnelle de l'appareil de cuisson de sorte que son ouverture supérieure soit en regard du dispositif de chauffe et à être supporté par le bloc de chauffe en position retournée par-dessus l'embase de sorte que son fond soit exposé au dispositif de chauffe dans la deuxième configuration fonctionnelle.

16. Système de cuisson selon la revendication 15, dans lequel un dispositif d'étanchéité est mis en oeuvre entre l'ouverture supérieure de l'au moins un récipient de cuisson (10) et le bloc de chauffe (2) lorsque ledit au moins un récipient de cuisson (10) est inséré dans le logement (9) et que l'appareil de cuisson est dans sa première configuration fonctionnelle.

17. Système de cuisson selon l'une quelconque des revendications 15 ou 16, dans lequel l'au moins un récipient de cuisson (10) est transparent.

18. Système de cuisson selon l'une quelconque des revendications 15 à 17, dans lequel le kit d'accessoires de cuisson comprend au moins un couvercle apte à être placé sur l'ouverture supérieure de l'au moins un récipient de cuisson (10).

19. Système de cuisson selon l'une quelconque des revendications 15 à 18, dans lequel l'appareil de cuisson à air chaud (1) comprend les caractéristiques de la revendication 14 et le kit d'accessoires de cuisson comprend au moins un ustensile de cuisson (28) complémentaire à l'au moins un récipient de cuisson (10), chaque ustensile de cuisson (28) comprenant deux éléments d'appui (28a, 28b) aptes à reposer sur les au moins un élément de support des faces internes (5b, 6b) des deux parois latérales (5, 6) de l'embase (3) afin de maintenir ledit au moins un ustensile de cuisson (28) dans le logement (9) de l'embase (3) avec un écartement par rapport au bloc de chauffe (2), l'au moins un ustensile de cuisson (28) étant notamment choisi parmi une grille (29), une plaque et un moule rigide plat muni d'empreintes.
